# NEUE EUROPÄISCHE PATENTSCHRIFT

(11) **EP 0 224 469 B2**
(45) Veröffentlichungstag und Bekanntmachung des Hinweises auf die Entscheidung über den Einspruch: **30.03.1994**
(45) Hinweis auf die Patenterteilung: 23.01.1991
(21) Anmeldenummer: 86890320.4
(22) Anmeldetag: 14.11.1986
(51) Int. Cl.: F25D 11/00, B60H 1/32, F25D 17/00, B60H 3/00, A23B 7/152

(54) **Transportabler Kühlcontainer**
Transportable refrigerated container
Conteneur frigorifique transportable

(30) Priorität: 28.11.1985 AT 3469/85
(43) Veröffentlichungstag der Anmeldung: 03.06.1987
(73) Patentinhaber: Franz Welz Internationale Transporte GmbH, A-5021 Salzburg (AT)
(72) Erfinder: Wassibauer, Rüdiger, A-5412 Puch 372 (AT); Russ, Werner, Ing., A-5101 Bergheim (AT)
(74) Vertreter: Wildhack, Helmut, Dipl.-Ing. Dr.

(56) Entgegenhaltungen:
- EP-A- 0 136 042
- AU-B- 559 301
- DD-A- 219 377
- GB-A- 1 198 354
- GB-A- 1 559 325
- GB-A- 2 042 365
- US-A- 3 307 618
- US-A- 4 003 728
- US-A- 4 142 372
- US-A- 4 537 043

## Beschreibung

Die Erfindung betrifft einen transportablen Kühlcontainer gemäß dem Oberbegriff des Patentanspruches 1.

Aus der DD-PS 219.377 ist ein Verfahren bzw. eine Einrichtung insbesondere zur Klimatisierung von Obstlagerhallen, d.h. stationären Bauwerken, bekannt, welche Einrichtung prinzipiell auch für Behälter und Fahrzeuge anwendbar ist. Mit der gemäß dieser Patentschrift vorgesehenen Kühlanlage, können die Temperatur sowie der N₂-, O₂- und H₂O-Gehalt der Lagerraumatmosphäre eingeregelt werden. Dabei wird dem Lager- bzw. Kühlraum Atmosphäre entnommen und über einen Verdichter und einen Kühler geführt. Im folgenden kann die Atmosphäre über eine Abscheideeinrichtung für CO₂, für H₂O und Kohlenwasserstoffe geführt werden, in welcher diese Gase absolut abgeschieden werden. Diese Einrichtung ist gefolgt von einer Auftrenneinrichtung zur Auftrennung von N₂ und O₂, wobei ein Pufferbehälter für N₂ vorgesehen ist, in dem beträchtliche Mengen von Stickstoff gespeichert werden. In einer nachgeschalteten Mischkammer kann sodann über den Verdichter und den Kühler geführte Atmosphäre, gegebenenfalls nach einer CO₂-, H₂O- und Kohlenwasserstoff-Abscheidung, mit Stickstoff oder Sauerstoff angereichert werden und über eine Befeuchtungseinrichtung dem Lagerraum zugeführt werden. In dem Lagerraum ist eine Kühlvorrichtung für die Atmosphäre des Lagerraumes vorgesehen; diese Kühlvorrichtung ist jedoch nicht für die dem Lagerraum zugeführte und eine bestimmte Zusammensetzung aufweisende Atmosphäre, sondern ganz allgemein für die Atmosphäre des Lagerraumes vorgesehen. Bei dieser Anordnung kann eine gezielte Einstellung des CO₂-Gehaltes nicht erreicht werden, da CO₂ entweder absolut abgeschieden oder unverändert rezirkuliert wird. Ein weiterer Nachteil besteht darin, daß das rezirkulierte Gas nach Veränderung seiner Zusammensetzung nicht gekühlt wird, sondern nach einer Befeuchtung in den Lagerraum mit einer nicht bestimmten Temperatur rückgeführt wird. Bei dieser Anordnung erfoflgt die CO₂- bzw. H₂O- bzw. Kohlenwasserstoff-Adsorption eher zum Schutz für die Auftrenneinrichtung, da derartige Einrichtungen nur dann effizient arbeiten, wenn der Wassergehalt und der CO₂-Gehalt reduziert ist.

Eine Einstellung der zirkulierten Atmosphäre durch aufeinander folgende Einstellung der einzelnen Gasbestandteile erfolgt nicht; es ist eine Mischkammer vorgesehen, in der verschiedene Gasbestandteile zusammengemischt werden, um eine gewisse Abänderung der Zusammensetzung zu erreichen. Eine Einstellung von CO₂ erfolgt nicht, da keine Einrichtung zur CO₂-Erhöhung vorhanden ist und CO₂ nur absolut entfernt werden kann. Ein Umlauf, bei dem bei gleichbleibenden CO₂Gehalt und gleichbleibendem H₂O-Gehalt der Stickstoffgehalt durch Sauerstoff-Entnahme erhöht wird, ist nicht möglich; eine Stickstofferhöhung erfolgt durch Zumischen von gespeichertem Stickstoff. Eine genaue Einstellung des H₂- bzw. H₂O- bzw. CO₂-Wertes mittels rechnergesteuerter Steuereinrichtungen erfolgt nicht. Diese bekannte Anordnung zeigt somit eine geringe Flexibilität sowie eine mangelnde Einstellbarkeit der zur zuträglichen Lagerung notwendigen Parameter; daraus ergibt sich auch eine mangelhafte Berücksichtigung der aufzuwendenden Kühlenergie; in diesem Zusammenhang ist es auch bedeutsam, daß die rezirkulierte Atmosphäre innerhalb des Lagerraumes abgekühlt werden muß, aber keine Zwangszirkulation der Atmosphäre im Lagerraum vorgesehen ist, welche Zirkulation jedoch für ein den Waren zuträgliches Kühlverhalten notwendig wäre.

Aus der US-PS 4,142.372 sind verschiedene Anordnungen zur Veränderung der Atmosphäre eines Kühlbehälters bekannt. Dabei wird dem Kühlbehälter entnommene Atmosphäre über Gasentfernungseinrichtungen geführt, die z.B. der dem Lagerraum entnommenen Atsmosphäre unerwünschte Gase, z.B. CO₂ und/oder H₂O-Dampf abscheiden, und zwar in absoluter und irreversibler Weise, um den Wirkungsgrad eines nachgeschalteten O₂-Adsorbers zu verbessern. Soferne diese Abscheidung von CO₂ und H₂O-Dampf reversibel vorgenommen wird, bzw. diese Gase der Atmosphäre nach der Abscheidung von O₂ wieder zugesetzt werden, kann ein stickstoffreicher Atmosphärenstrom mit CO₂ und H₂O-Dampf aufgestockt dem Kühlraum wieder zugeführt werden. Dabei entsteht jedoch eine beträchtliche Temperaturerhöhung dieses Atmosphärenstroms, der in den Kühlbehälter zurückgeführt wird, wodurch eine empfindliche Störung des Temperaturhaushaltes und letztlich auch des Feuchtigkeitshaushaltes erfolgt, da die Temperatur und damit die relative Luftfeuchtigkeit nicht kontrollierbar sind.

Ferner zeigt diese Druckschrift auch eine Anordnung mit einem Adsorber zur Abtrennung von O₂ und einem CO₂-Scrubber. Der CO₂-Scrubber kann jedoch nur alternativ zum O₂-Adsorber eingesetzt werden, sodaß im Umlauf der Atmosphäre diese nicht gleichzeitig bezüglich des CO₂- und N₂-Gehaltes eingestellt werden kann. Abgesehen davon, ist bei dieser Einrichtung von einer gesteuerten Abscheidung von H₂O-Dampf in dem umlaufenden Atmosphärenstrom keine Rede; im Atmosphärenstrom können in geregelter Weise gleichzeitig zwei Komponenten nicht verändert werden: darüber hinaus kann von einer kontinuierlichen Abänderung der Zusammensetzung keine Rede sein, da immer nur eine Komponente verändert wird.

Aus der US-PS 4,003.728 ist ein Kühlbehälter bekannt, bei dem in einem vom Lagerraum getrennten Abteil ein Gebläse die Atmosphäre aus dem Lagerraum absaugt und über eine Kühl- bzw. Heizeinrichtung wieder in den Lagerraum rezirkuliert, wobei am Boden des Lagerraumes eine Befeuchtungsmöglichkeit durch dort stehendes Wasser gegeben ist. Eine Veränderung der Atmosphärenzusammensetzung in geregelter Weise ist nicht möglich, da keine Einrichtungen zur Veränderung des N₂- bzw. CO₂-Gehaltes vorgesehen sind; die Veränderung des H₂O-Gehaltes erfolgt ungeregelt und nur mangelhaft, indem die feuchte Luft über eine Kühleinrichtung geleitet wird, dort allenfalls Wasser abgeschieden wird und beim Überstreichen der rezirkulierten Atmosphäre eine Feuchtigkeitsaufnahme eintreten soll, die jedoch nur in nicht zufriedenstellender Weise erfolgen kann; die Atmosphäre kommt mit 100%-iger Feuchtigkeit aus der Kühleinrichtung zu der Befeuchtungseinrichtung und kann somit überhaupt keine Feuchte zusätzlich aufnehmen; nach der Einspeisung im Lagerraum erfolgt eine Temperaturerhöhung und somit eine Reduktion der relativen Feuchte auf die im Lagerraum herrschende relative Luftfeuchte, die zu gering sein kann.

Ein Kühlbehälter der eingangs genannten Art ist aus der US-PS 3,307.618 bekannt. Nachteilig bei diesem Kühlbehälter ist es jedoch, daß die bezüglich ihrer Zusammensetzung geänderte Atmosphäre vor der Veränderung der Zusammensetzung gekühlt wird und nach der Behandlung mit einer nicht definierten Temperatur über eine Befeuchtungseinrichtung in den Lagerraum rezirkuliert wird, sodaß auch der H₂O-Gehalt nicht definiert ist. Darüber hinaus ist diese Umwälzung zur Veränderung der Atmosphäre die einzige im Lagerraum vorgesehene Umwälzung, so daß entweder nicht ausreichende Atmosphärenmengen umgewälzt werden oder die zur Veränderung ihrer Zusammensetzung umgewälzten Atmosphärenmengen eben nicht allzu groß sein können, weil derartige Einrichtungen beträchtlichen Platzaufwand und Komplexizität der Anordnung erforderlich machen. Darüber hinaus ist zu bemerken, daß die Einstellung des Stickstoffgehaltes nicht durch eine Entfernung von Sauerstoff erfolgt, sondern daß zur Erhöhung des Stickstoffgehaltes dieser aus einem Speicher in die umgewälzte Atmosphäre eingespeist wird. Eine CO₂-Reduktion erfolgt in der dem Lagerraum entnommenen Atmosphäre nicht; eine CO₂-Reduktion erfolgt durch Entnahme eines getrennten Atmosphärenstroms aus dem Lagerraum und Rezirkulierung der bezüglich CO₂ reduzierten Atmosphäre in den umgewälzten Gasstrom zwischen Kühleinrichtung und Befeuchtungseinrichtung. Der Gasstrom wird mittels eines Gebläses umgewälzt, sodaß der erforderliche Druck zum Durchsatz von Gasabscheidungseinrichtungen nicht erreicht wird; lediglich der Atmosphärenstrom zur Reduktion von CO₂ wird mittels eines Kompressors entnommen. Bei dieser bekannten Einrichtung wird nach der Abkühlung der Atmosphäre mit ihr eine Reihe von Manipulationen vorgenommen; beispielsweise wird der Atmosphäre Atmosphäre mit verringertem CO₂-Gehalt zugeführt; es erfolgt allenfalls eine Zugabe von nicht gekühlten CO₂; es erfolgt allenfalls eine Zugabe von stickstoffreicher Atmosphäre; es erfolgt allenfalls eine Zugabe von zerstäubtem Wasser. Alle diese Vorgänge verändern die Temperatur der Atmosphäre in unkontrollierbarer Weise. Diese bezüglich ihrer Zusammensetzung veränderte Atmosphäre wird in den Lagerraum auf die kühlzuhaltende Ware eingeblasen und stellt gleichzeitig den einzigen Strom von Atmosphäre dar, der in den Lagerraum eingeblasen wird bzw. der die Atmosphäre im Lagerraum umwälzt. Eine Temperaturkontrolle regelt zwar die Kühlleistung einer Kühleinrichtung, die zu Beginn des Umwälzweges gelegen ist; es dürfte jedoch nicht möglich sein, daß die tatsächlich auf das eingelagerte Gut geblasene umgewälzte Atmosphäre die richtige Temperatur und Feuchtigkeit besitzt; insbesondere besteht die große Gefahr, daß durch einen geringen Defekt bzw. eine Fehlfunktion, z.B. durch ein kleines Leck, eine Temperaturerhöhung eintritt, die durch eine Erhöhung der Kälteleistung des am Anfang des Umwälzweges gelegenen Kühlaggregates nicht beeinflußt werden kann, so daß unkontrolliert erwärmte Atmosphäre auf die Waren trifft und erst dann wieder zum Kühlaggregat gelangt, weil eben der Ort dieser Temperaturerhöhung im Strömungsweg der umgewälzten Atmosphäre nach der Kühleinrichtung gelegen ist.

Ziel der Erfindung ist die Erstellung eines beim Transport einwandfrei arbeitenden Kühlcontainers, dessen Energiebedarf gering ist und bei dem für das jeweilig eingelagerte Gut optimale Atmosphärenwerte in einfacher Weise eingeregelt werden können. Gleichzeitig soll diese Anordnung möglichst einfach aufgebaut sein und durch die gegenseitige Anordnung der einzelnen Bauteile die bestmögliche Veränderung der Atmosphärenwerte gewährleistet werden.

Diese Ziele werden bei einem Kühlcontainer der eingangs genannten Art erfindungsgemäß mit dem im Kennzeichen des Patentanspruches 1 angeführten Merkmalen erreicht.

Mittels der hohen Luftumwälzung über das Gebläse wird eine gute Temperaturkonstanthaltung im Lagerraum sichergestellt; durch die Schaffung zweier Kreisläufe, die kontinuierliche Steuerung sämtlicher Einrichtungen durch die Steuereinrichtung und die spezielle Führung der umgewälzten Atmosphäre wird der Energiebedarf minimiert und aufgrund der Anordnung der Kühleinrichtung am Ende des Umwälzweges kann die Kühltemperatur optimal eingeregelt werden. Auf Grund der Tatsache, daß die Befeuchtungseinrichtung erfindungsgemäß nach der Kühleinrichtung gelegen ist, können die relative und absolute Luftfeuchtigkeit völlig exakt in Abhängigkeit von der tatsächlich in den Lagerraum eingespeisten Gaszusammensetzung und der vorhandenen bzw. gewünschten Temperatur eingeregelt werden, sodaß diese für die Lagerung von Waren wichtigen Parameter ausgesprochen gut einregelbar sind. Darüber hinaus wird durch die vorgesehene Einrichtung zur Abscheidung von H₂O-Dampf in Fällen von H₂O-Dampf-Überschuß bereits der Wasserdampfgehalt der zirkulierten Atmosphäre vorgegeben; diese in ihrem Fall bezüglich ihres Wasserdampfgehaltes bereits im wesentlichen voreingestellte Atmosphäre braucht somit in der Befeuchtungseinrichtung unter Umständen nur mehr in geringem Umfang befeuchtet zu werden, womit die Regelungsgenauigkeit sehr hoch wird. Veränderungen der Temperatur der umgewälzten Atmosphäre während der Veränderung ihrer Zusammensetzungen spielen keine Rolle, da die bezüglich ihrer Zusammensetzung veränderte Atmosphäre über die Kühleinrichtung geführt wird und erst dann über die Befeuchtungseinrichtung in den Lagerraum rezirkuliert wird. Die Umwälzanlage ist einfach aufgebaut, nämlich die Einrichtungen zur Abscheidung von H₂O, CO₂ und/oder Äthylen bzw. O₂ sind der Reihe nach hintereinander angeordnet und können wahlweise durchlaufen oder mittels Bypassleitungen umlaufen werden. Auf diese Weise ist eine einfache Steuerung sichergestellt, die ausgesprochen rasch auf Änderungen reagieren kann. Sowohl im umgewälzten Hauptstrom der Atmosphäre als auch in der umgewälzten und gegebenenfalls bezüglich ihrer Zusammensetzung veränderten Teilmenge der Atmosphäre erfolgt zuerst die Kühlung und dann die Befeuchtung und dann das Einblasen auf die Waren, sodaß in keinem Fall feuchtigkeitsmäßig oder temperaturmäßig für die Waren Schaden eintreten kann. Durch die sehr präzise und rasch erfolgende Steuerung der einzelnen Parameter werden auch energetisch optimale Verhältnisse geschaffen, sodaß der Bedarf an Kühlenergie herabgesetzt werden kann.

Da die bezüglich ihrer Zusammensetzung eingeregelte Atmosphäre über eine Kühleinrichtung geführt und in abgekühltem Zustand in den Lagerraum eingeblasen wird, befindet sich im Lagerraum des erfindungsgemäßen Kühlcontainers keine Kühleinrichtung; beim Erfindungsgegenstand erfolgt eine strenge Trennung zwischen dem Lagerraum und dem Raum, in dem die Kühleinrichtung sowie alle weiteren notwendigen Aggregate angeordnet sind; es wird die gekühlte Atmosphäre in den Lagerraum geblasen und über die Waren geleitet, sodaß diese gleichmäßig und ohne Gefrierschäden gekühlt werden.

Der erfindungsgemäße Kühlcontainer hält eine gekühlte Atmosphäre bestimmter Zusammensetzung aufrecht, insbesondere eine Atmosphäre mit variabler Konzentration der Gasbestandteile Stickstoff, Sauerstoff, Kohlendioxid und H₂O-Dampf. Es kann aber auch die Aufrechterhaltung einer Inertgas-Atmosphäre, z.B. aus Argon, gewünscht werden. Derartige Kühlcontainer sind mit entsprechenden Kühl- bzw. Kältemaschinen mit elektrischen oder dieselekektrischen Antrieb oder mit einer Flüssigstickstoffkühlanlage zur Abdeckung des auftretenden Kühlbedarfes ausgestattet.

Die Zusammensetzung der Atmosphäre im Kühlbehälter richtet sich nach den einzulagernden Gütern. Bei Gemüse, Obst und Lebensmitteln wird man eine Atmosphäre wählen, die relativ geringen Sauerstoffgehalt aufweist. Bei anderen Gütern, z.B. Dynamit, Sprengstoffen oder Waffen ist es bevorzugt, wenn in der Atmosphäre kein Sauerstoff vorhanden ist. Bei anderen Gütern wiederum ist unter Umständen eine Edelgasatmosphäre, z.B. Argon, vorzuziehen. In allen Fällen muß das Problem bewältigt werden, die gewünschte anfängliche Atmosphäre einzustellen und dann während der Lagerung beizubehalten. Das Einstellen der gewünschten Zusammensetzung der Atmosphäre am Anfang der Lagerung kann z.B. durch Einblasen der entsprechenden Gaszusammensetzungen und Verdrängung der Luft erfolgen oder dadurch, daß der Luft gewünschte Komponenten zugesetzt bzw. angereichert werden. Beim Transport von Zierfischen ist z.B. eine O₂-reiche Atmosphäre erwünscht, sodaß N₂ abgeschieden werden muß.

Die Aufrechterhaltung bzw. anfängliche Einstellung der Gaszusammensetzung fällt aufgrund von Leckagen und des unterschiedlichen Partialdruckes im Inneren des Kühlbehälters und an dessen Außenseite mitunter schwer. Schwierigkeiten bereiten ferner, z.B. bei Früchten, die durch die Früchte erzeugten Gase, nämlich Kohlendioxid und Äthylen, welche die gewünschte Gaszusammensetzung im Containerinneren in nachteiliger Weise beeinflussen und nunmehr gut eingeregelt werden können.

Verderbliche Waren pflanzlicher oder tierischer Herkunft können in gekühlten Räumen bei einer bestimmten Zusammensetzung de Atmosphäre wesentlich länger gelagert werden, ohne Qualitätsverluste in Kauf nehmen zu müssen; die für einzelne Waren notwendige Zusammensetzung der Atmosphäre is jedoch von Produkt zu Produkt verschieden, ja sogar unterschiedlich in Abhängigkeit vom Anbaugebiet. Generell wird man für Lebensmittel Sauerstoffwerte zwischen 1 bis 15%, Kohlendioxidwerte zwischen 1 bis 20%, Stickstoffwerte wie in der Außenluft, Temperaturen zwischen 0 und 15°C, sowie eine Feuchtigkeit zwischen 70 bis 98% relative Luftfeuchtigkeit (etwa bis zu 6 g H₂O/Nm³ Luft) einregeln.

Werden in der Atmosphäre gleiche oder höhere Konzentrationen von Gasen gefordert als deren Konzentrationen in der Außenluft, können der Atmosphäre zur Erhöhung einzelner Gaskonzentrationen über ihren Anfangswert oder zum Ausgleich von Gasverlusten derartige Gase zugesetzt werden. Dazu können entsprechende Gasspeicher mitgeführt bzw. vorgesehen sein. Zu bemerken ist, daß die Atmosphäre aus einem Gas oder mehreren Gasen bestehen kann und alle Ausführungen auch für eine aus einem Gas bestehende Atmosphäre gelten. Vorteilhaft ist es, wenn zur Erhöhung des CO₂-Gehaltes der Atmosphäre ein CO₂-Speicher vorgesehen ist, der mit Rückführleitung für die geänderte Zusammensetzung aufweisende Atmosphäre verbunden ist.

Ein guter Wirkungsgrad ergibt sich, wenn die Atmosphäre vor dem Entzug unerwünschter bzw. im Übermaß vorhandender Atmosphärenbestandteile, insbesondere vor ihrer Zufuhr zu Molekularsieben, z.B. O₂-Molekularsieben, getrocknet wird. Bei einer vorteilhaften Ausführungsform der Erfindung ist vorgesehen, daß vor einem Entzug von O₂ mit einem Molekularsieb die Restfeuchte der diesem zugeführten, z.B. bei Lebensmitteln als eingelagertem Gut bis 6 g H₂O/ Nm³ aufweisenden, Atmosphäre auf weniger als 0,1 bis 0,5 g H₂O/Nm³, insbesondere weniger als 0,1 bis 0,2 g H₂O/Nm³, jeweils (gemessen im entspannten Zustand der Atmosphäre) durch Wasserabscheidung eingestellt wird. Dies ist eine wesentliche Voraussetzung für den Einsatz eines O₂-Molekularsiebes bei der Lagerung von Lebensmitteln bzw. Früchten bzw. Waren, die eine höhere relative Luftfeuchtigkeit, z.B. 50 bis 98% Luftfeuchtigkeit, während der Lagerung benötigen (Nm³ = Normalkubikmeter).

Zur Verringerung der in der Atmosphäre enthaltenen Feuchtigkeit kann eine Wasserabscheideeinrichtung im Umwälzkreislauf vorgesehen sein, die den Molekularsieben, insbesondere dem Molekularsieb für O₂, vorgeschaltet ist.

Die Atmosphäre wird aus dem Inneren des Containers mittels Fordereinrichtungen über die Gasabscheideeinrichtungen umgewälzt, in denen unter Steuerung durch die Steuereinheit nicht erwünschte Gasbestandteile abgeschieden werden. Die Steuereinheit steuert auch eine gewünschte Konzentrationserhöhung einzelner Gasbestandteile, indem diese Gasbestandteile von entsprechenden Gasspeichereinheiten in den Innenraum des Containers eingespeist werden. Dazu sind die Meßsignale der Meßsensoren der Steuereinheit, z.B. einem Rechner, zugeführt. Vorteilhaft ist es hiebei, wenn zur Nachregelung der gewünschten Sollwerte der Atmosphärenbestandteile die Abscheidewirkung der Gasentfernungseinrichtungen steuernde Regler, insbesondere PID-Regler, vorgesehen sind, bei denen die Stellgröße in Abhängigkeit von der Ist-Sollwertabweichung veränderbar ist, wobei die Regler gegebenenfalls von der zentralen Steuereinheit in Abhängigkeit von den Meßsignalen der Meßsensoren gesteuert sind.

Die Steuereinheit regelt bzw. steuert sämtliche Umwälzvorgänge, Abscheidevorgänge, Abscheideprozesse, Feuchtigkeits- bzw. Temperatureinregelungen, Konzentrationsänderungen, Druckeinstellungen, usw., indem sie die Ventile, Motoren, Pumpen, Kühleinrichtung, Befeuchtungsanlage, Ventilatoren, usw- ein- und auschaltet bzw. einstellt. Ferner umfaßt die Steuereinheit eine auf einführbare Datenträger, z.B. Lochkarten, Magnetstreifen, od.dgl., bzw. auf telefonisches Modem oder Funkempfänger für Daten ansprechende Eingabeeinheit, wobei diese Datenträger insbesondere das eingelagerte Gut, die Lagerungsdauer, die Atmosphärenzusammensetzung, die Temperatur, den Druck, usw., betreffende Daten enthalten.

Einfach und platzsparend wird der Kühlcontainer aufgebaut, wenn zum gleichzeitigen Entzug von CO₂ und Äthylen ein Molekularsiebgranulate für CO₂ und Äthylen in gemischter Form enthaltender(s) Behälter bzw. Molekularsieb vorgesehen ist. Diese insbesondere bei der Lagerung von Gemüse und Früchten zumeist gleichzeitig entstehenden Gase werden damit gleichzeitig abgeschieden.

Insbesondere im Hinblick auf längerdauernde Einlagerungen von Gut unter Kühlung und bestimmter Atmosphärenzusammensetzung ist es von Vorteil, wenn alle Temperaturen, Atmosphärenzusammensetzungen, die Luftfeuchtigkeit, die Außentemperaturen und sämtliche weiteren Betriebsparameter in einer Aufzeichnungseinheit aufgezeichnet und gespeichert werden, um nach dem Lagerungsende einen ordnungsgemäßen oder fehlerhaften Betrieb während der Lagerung nachweisen zu können. Unter Verwendung der der Steuereinheit zugeführten Istwerte der Betriebsparameter und der z.B. von Datenträgern eingespeisten Soll-Daten bzw. von eingespeicherten Daten kann ein optimales Lagerprogramm gesteuert werden. Um unbefugte Eingriffe während der Lagerung zu vermeiden, kann vorgesehen sein, daß die Regel- bzw. Steuereinheit zur Feststellung von Eingriffen in das Programm einen auf ihre Speichereinheit einwirkenden Schlüsselschalter umfaßt. Damit sind auch während länger dauernder Transporte Eingriffe in den Programmablauf bzw. Eingaben von Daten in die zentrale Steuereinheit nachweisbar. Vorteilhafterweise kann noch vorgesehen sein, daß alle, insbesondere auch die händisch betätigbaren, Ventile, Regler und Stelleinrichtungen usw., mit Sensoren ausgerüstet sind und daß bei deren händischer Betätigung die Art und der Zeitpunkt der Betätigung der Aufzeichnungseinrichtung zur Speicherung übermittelt werden, bzw. daß eine, den Zutritt zur Steuereinrichtung und/oder Aufzeichnungseinrichtung und/oder Gasabscheidungseinrichtung sowie allen weiteren zur Einstellung der Atmosphäre und/oder Temperatur dienenden Einrichtungen verhindernde Verschlußeinrichtung, z.B. Tür, Deckel, usw., vorgesehen ist, deren Öffnung von der Aufzeichnungseinrichtung abtastbar ist und aufgezeichnet wird.

Bei bekannten Kühlbehältern wird eine geregelte Atmosphäre meist dadurch erreicht, daß unter Zuhilfenahme von Flüssigstickstoffbehältern zu Kühlzwecken und gleichzeitiger N₂-Versorgung der Sauerstoff ersetzt wird und unter Zuhilfenahme von Kohlendioxidflaschen CO₂ eingeleitet und die gewünschte Atmosphäre hergestellt wird; O₂- bzw. CO₂-Sensoren dienen zur Einregelung der Atmosphäre. Wenn durch eindringende oder entstandene Fremdgase die Konzentration der Atmosphäre verändert wird, wird durch Zufuhr des entsprechenden Gases die Konzentration wieder hergestellt. Diese Einrichtungen haben einen relativ hohen Gas- und Energieverbrauch zur Folge. Gegenüber diesen Systemen bzw. Einrichtungen ergibt es sich beim erfindungsgemäßen Kühlbehälter, daß der Lagerraum bei genormten Kühlbehältern bzw. Containern größer gehalten werden kann, die notwendigen Kühl-, Gasbehandlungs- und Steuereinrichtungen weniger aufwendig werden, die Frachtrate verbilligt und der Aktionsradius erweitert werden kann.

Der erfindungsgemäße Kühlcontainer ermöglicht in der Praxis erstmalig eine langdauernde Kühlung von Waren unter einer Atmosphäre mit genau vorgegegebener Zusammensetzung über die gesamte Kühldauer. Gleichzeitig ist vorgesehen, daß durch die immerwährende Steuerung sämtliche Einrichtungen während des Kühlvorganges durch eingegebene Parameter und durch die spezielle Führung der umgewälzten Atmosphäre der Energiebedarf des Containers minimiert wird. Bemerkt wird noch, daß die Einstellung einer Atmosphäre bestimmter Zusammensetzung mit der Kühlung in engem Zusammenhang steht, da es sich in der Praxis überraschenderweise erwiesen hat, daß bei Optimierung der Atmosphärenzusammensetzung die Kühltemperatur einen höheren Wert besitzen kann und somit die Waren energiesparender gelagert werden können.

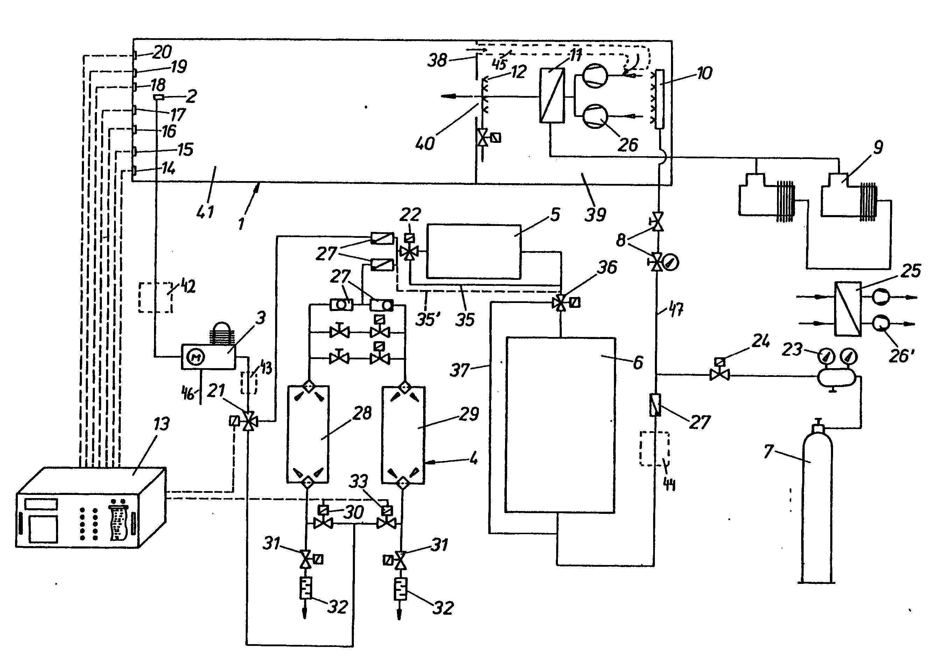

Im folgenden wird die Erfindung anhand der Zeichnung, die ein Ausführungsbeispiel zeigt, näher erläutert.

In der Zeichnung ist schematisch ein Kühlcontainer 1 dargestellt, der z.B. auf einem Eisenbahnwaggon oder einem LKW transportiert werden kann. Im Inneren des Kühlcontainers 1 soll eine gekühlte Atmosphäre bestimmter Zusammensetzung eingestellt bzw. aufrechterhalten werden. Dazu wird Atmosphäre dem Kühlcontainer 1 entnommen, z.B. indem sie durch zumindest eine Absaugöffnung 2 von einem Kompressor 3 abgesaugt wird. Nach einer Verdichtung wird die Atmosphäre über ein Dreiwegventil 21 entweder direkt oder über eine Wasserabscheidungseinrichtung 4, z.B. ein H₂O-Molekularsieb, einem weiteren Dreiwegventil 22 zugeführt, das die Wahl zuläßt, die gegebenenfalls von Wasserdampf weitgehend befreite Atmosphäre einer CO₂- und/oder Äthylenabscheidungseinrichtung 5, insbesondere einem CO₂- und/oder Äthylenmolekularsieb, zuzuführen oder direkt einer O₂-Abscheidungseinrichtung 6, insbesondere einem O₂-Molekularsieb, zuzuführen. Je nach dem Bedarf bzw. dem Einsatzzweck können auch Gasabscheidungseinrichtungen, insbesondere Molekularsiebe, für andere Gase in den Kreislauf eingeschaltet werden. Die Reihenfolge der Abscheidungseinrichtungen ist beliebig; lediglich die H₂O-Abscheidungseinrichtungen sollen vor den Gasabscheidungseinrichtungen, insbesondere den O₂-Abscheidern, angeordnet sein. Wenn eine Konzentration eines Gasbestandteiles der Atmosphäre über derjenigen in der Außenluft liegen soll, erfolgt eine Einspeisung des zusätzlichen Gases z.B. derart, wie es für die CO₂-Zufuhr dargestellt ist, für die ein CO₂-Gasbehälter 7 vorgesehen ist, mit dem über entsprechende Druckeinstell- bzw. Drosseleinrichtungen 23 über ein Ventil 24 CO₂ in den Umwälzkreislauf der Atmosphäre eingespeist werden kann. Über eine Druck- und Mengenreguliereinheit 8 wird sodann das entsprechend seiner Zusammensetzung veränderte Atmosphärengemisch wieder in den Container 1 über eine Ausströmeinheit 10 eingeblasen. Das veränderte Atmosphärengemisch wird gegebenenfalls mit der in dem Abteil befindlichen bzw. eintretenden Atmosphäre von einem Gebläse 26 über eine Kühleinrichtung bzw. einen Verdampfer 11 einer Kälteanlage 9, deren Kondensator 25 mit einem Gebläse 26 mit Außenluft oder mit einem behälter- bzw. fahrzeugseitigen Wasserkreislauf gekühlt ist, in den Lagerraum 41 geblasen. Die aus der bzw. über die Kühleinrichtung 11 strömende Atmosphäre strömt über eine Befeuchtungsanlage 12, um -wenn es gewünscht ist- eine entsprechende Feuchtigkeit im Container aufrechtzuerhalten. Die Befeuchtungsanlage 12 wird von einem H₂O-Behälter oder mit dem in der H₂O-Abscheideeinrichtung 4 abgeschiedenen H₂O gespeist. Vorteilhaft ist es, wenn die Kühlanlage 9 zwei Kompressoren aufweist, um ein Ausfallsrisiko zu vermindern. Die dem Verdampfer 11 zugeordneten Ventilatoren bzw. das Gebläse 26 haben gleichzeitig auch die Funktion, die Atmosphäre im Container 1 zu verteilen und umzuwälzen.

Wie in der Zeichnung dargestellt, sind alle Atmosphären- bzw. Außenluftbehandlungseinrichtungen bzw. die Gasabscheidungseinrichtungen, die Steuereinheit 13 sowie alle anderen Betreibseinrichtungen in einer Abteilung 39 des Kühlcontainers 1 angeordnet, die mit eine Wand 38 vom übrigen Behälterinnenraum abgetrennt ist. Durch- eine Öffnung bzw. einen Kanal 40 wird die umgewälzte Atmosphäre bzw. entsprechend veränderte Außenluft dem eigentlichen Lagerraum 41 für das Gut zugeführt. In bzw. vor diesem Kanal bzw. dieser Öffnung 40 und bevorzugterweise vor der Befeuchtungseinrichtung 12 befinden sich vorteilhafterweise die Meßsensoren 14, 15, 16, 17, 18, 19, so daß sie von der umgewälzten Atmosphäre angeströmt werden. Es ist jedoch verständlich, daß weitere Meßsensoren an beliebigen Stellen im Lagerraum 41 vorgesehen sein können.

In der Zeichnung sind mit 27 allgemein Rückschlagventile bezeichnet.

Die dem Kühlcontainer 1 entnommene Atmosphäre wird über die H₂O-Abscheidungseinrichtung 4, die im vorliegenden Fall von H₂O-Molekularsieben 28, 29 gebildet ist, derart geführt, daß zuerst das eine Molekularsieb 28 über das Ventil 30 beschickt wird und die getrocknete Atmosphäre über das Rückschlagventil 27 zum Dreiwegventil 22 gelangt. Wenn das Molekularsieb 28 mit H₂O aufgeladen ist, erfolgt über das Ventil 31 eine Entspannung der komprimierten Atmosphäre und eine Entladung des abgeschiedenen H₂O durch den Auslaß 32. Ferner kann dem Molekularsieb 29 über das Ventil 33 feuchtigkeitsbeladene Atmosphäre zugeführt werden und nach der Abscheidung der Feuchtigkeit die trokkene Atmosphäre über die Ventile 34 in das Molekularsieb 28 zu dessen Spülung rückgeführt werden, um dieses vollständig von abgelagertem H₂O zu befreien.

Prinzipiell ist zu bemerken, daß auch andere Gasabscheidungseinrichtungen als Molekularsiebe vorgesehen werden können; es ist eine Abscheidung, insbesondere der Feuchtigkeit, auch mittels Aktivkohle, Silikagel, usw. möglich. Sämtliche Abscheidungseinrichtungen können aus mehreren, in Serie geschalteten Molekularsiebeinheiten bestehen. Die Gastrocknung kann mittels eines Absorptionstrockners nach dem Heat-Less-Prinzip erfolgen.

Die N₂-Anreicherung geschieht erfindungsgemäß im N₂-Molekularsieb 6 derart, daß N₂ aus der durchströmenden, allenfalls mit Außenluft über die Kompressorleitung 46 angereicherten Atmosphäre entnommen und dem Molekularsieb angelagert wird und nach Spülen des Molekularsiebes von diesem in die Rückführungsleitung 47 abgegeben und von der Ausströmeinheit 10 eingeblasen wird.

Besonders vorteilhaft ist es, wenn in der Gasabscheidungseinrichtung 5 eine Abscheidung von CO₂ und Äthylen und/oder H₂O gleichzeitig erfolgt, da dies besonders platzsparend ist.

Sämtliche Funktionen des Kühlcontainers 1, insbesondere die Steuerung der Ventile, das Ein- und Ausschalten sämtlicher elektrischer Einrichtungen, insbesondere der Motoren und/oder der Kompressoren, die Einspeisung der Zusatzgase bzw. der Durchsatz der Atmosphäre durch den Umwälzkreislauf werden von einer zentralen Steuereinheit 13 gesteuert und vorteilhafterweise überwacht. Dazu können der Steuereinheit 13 Signale von einem O₂-Sensor 14, einem N₂-Sensor 15, einem CO₂-Sensor 16, einem Äthylensensor 17, einem Temperatursensor 18, einem H₂O-Dampfsensor bzw. Feuchtesensor 19, und gegebenenfalls von zumindest einem weiteren Sensor 20 (z.b. für weitere Gasbestandteile, Meßwerte der Temperatur des Lagergutes, der Außentemperatur, usw.) zugeführt werden. Die Funktion der Steuereinheit 13 ist schematisch durch zu den Dreiwegventilen 21, 30 und 33 führende Steuerleitungen dargestellt. Die zu den anderen Ventilen, Schalteinrichtungen, usw. führenden Steuerleitungen sind nicht dargestellt. Bereits das Absaugen der Atmosphäre aus dem Kühlcontainer 1 durch den Kompressor 3, der für den beim Durchsatz durch den Abscheidungskreislauf erforderlichen Druck sorgt, erfolgt unter der Steuerung der Steuereinheit 13. Von der Steuereinheit 13 wird z.B. durch Steuerung des Ventils 21 bestimmt, ob die umgewälzt Atmosphäre durch die Trockeneinrichtung 4 oder direkt in den CO₂- und Äthylenabscheider 5 geführt werden soll, was abhängig ist von dem gemessenen Feuchtigkeitsgehalt der Atmosphäre. Wenn es sich z.B. beim eingelagerten Gut um Früchte handelt, wird der CO₂- und Äthylengehalt in der Atmosphäre ansteigen und es ist eine relativ hohe Luftfeuchtigkeit vorhanden, sodaß der Rechner das Ventil 21 derart schalten wird, daß die Atmosphäre über die H₂O-Abscheidungseinrichtung 4 geführt ist und dann über die CO₂- und Äthylenabscheidungseinrichtung 5 geführt wird. Ist jedoch der CO₂-Gehalt und/oder der Äthylengehalt nicht maßgeblich bzw. nieder, kann die CO₂-Abscheidungseinrichtung 5 durch entsprechende Einstellung des Ventils 22 auch über eine By-Pass-Leitung 35 umgangen werden. Eine ähnliche Umgehungsmöglichkeit der Sauerstoffabscheidungseinrichtung 6 wird durch ein Ventil 36 und eine By-Pass-Leitung 37 ermöglicht, wenn eine O₂-Abscheidung nicht erforderlich ist. Wenn die Co₂- und/oder Äthylenabscheideeinrichtung auch als H₂O-Abscheideeinrichtung ausgelegt ist, kann das Ventil 22 entfallen und die von der H₂O-Abscheideeinrichtung 4 abgehende Leitung wird mit der von der CO₂- und/oder Äthylen- und/oder H₂O-Abscheideeinrichtung kommenden Leitung zusammengeführt (strichlierte Leitung 35' in der Zeichnung). Prinzipiell kann jede Abscheideeinrichtung mit Leitungen umgangen werden bzw. können Ventile vorgesehen sein, um eine gewünschte Reihenfolge des Abscheidens bzw. Zusetzens von Gasen vorzusehen.

Auch die Befeuchtung mittels der Befeuchtungseinrichtung 12 sowie die Kälteerzeugung mit der Kälteanlage 9 erfolgen unter Steuerung der zentralen Steuereinheit 13.

Insbesondere von Vorteil ist es, wenn auch die Außentemperatur und die Temperatur des eingelagerten Gutes über weitere Meßsensoren gemessen werden und das Verhältnis von Außentemperatur zur Lagerguttemperatur entsprechend berücksichtigt wird.

Der Einsatz von Molekularsieben in den einzelnen Gasabscheideeinrichtungen verbessert die Standzeit und erhöht den volumetrischen Füllgrad des Containers, da Molekularsiebe geringes Volumen einnehmen. Darüberhinaus sind Molekularsiebabscheideeinrichtungen selbsttätig regenerierbar und langfristig einsetzbar. Insbesondere bei Lebensmitteln, insbesondere Gemüse, Früchten, Fleisch, u.dgl., bei denen eine hohe Luftfeuchtigkeit, insbesondere im Rahmen von etwa 90%, aufrechterhalten werden muß, ist die Anordnung einer Wasserabscheidungseinrichtung vor dem Molekularsieb 5 zur ausreichenden Abscheidung von O₂ erforderlich.

Die Atmosphäre bzw. die Außenluft wurde vor ihrer Umwälzung in dem Abscheidungskreislauf komprimiert, um den Wirkungsgrad der Molekularsiebe zu erhöhen, da bei höherem Druck eine größere Beladung der Molekularsiebe mit den entsprechenden Gaskomponenten erfolgen kann.

Besonders vorteilhaft ist es zum Zwecke der Optimierung des Energiehaushaltes, wenn zur Nachregelung der Atmosphären-Sollwerte und/ oder Druck-Sollwerte und/oder Temperatur-Sollwerte, usw., Proportional-, Integral-, Differentialregler (PID-Regler) eingesetzt werden, bei denen die Stellgröße in Abhängigkeit von der Ist-Sollwertabweichung eingeregelt wird.

Die zentrale Steuereinheit 13, die sämtliche Regel- und Steuerfunktionen für die Einrichtungen des Kühlcontainers 1 übernimmt, besitzt ein Betriebssystem mit Selbstdiagnose, um dem Betreiber jederzeit die Betriebssituation anzeigen zu können, einen Uhrenbaustein, Regel- und Steuermodule, Schnittstellen zur Bedienungseinheit sowie zu Ausgabeeinheiten bzw. zu übergeordneten Rechnern. Insbesondere soll eine Datenaufzeichnung bzw. Speicherung des Betriebszustandes über einen längeren Zeitraum, z.B. bis zu 70 oder 100 Tagen, vorgesehen sein und die hiefür nötigen Speicherkapazitäten. Ferner besitzt die Steuereinheit 13 eine gepufferte Notstromversorgung und eine Spannungsüberwachung.

Sämtliche zu überwachenden, zu messenden und zu steuernden Parameter und alle notwendigen Zustandsänderungen und Schaltvorgänge, insbesondere unerlaubte Veränderungen der Betriebsparameter sowie unerlaubte Betätigung werden in Speichereinheiten der Aufzeichnungseinheit gespeichert, um z.B. Ursachen für eine Verderbnis des gelagerten Gutes, Fehlbedienungen, usw., nachweisen zu können. Ferner werden Speicher eingesetzt, deren Speicherinhalt bei einem Stromausfall nicht verlorengeht und es ist vorgesehen, daß der Speicherinhalt, der die Daten über die gesamte Lagerzeit enthält, nur nach einer Code-Eingabe und/oder nach erfolgtem Ausdruck gelöscht oder überschrieben werden kann. Ferner sind dem Rechner externe Meldeeinrichtungen zugeordnet, die z.B. einen Alarm abgeben, wenn eine Störung erfolgt oder ein Service erforderlich ist.

Der Zutritt zu der Abteilung 39 kann mit einer von außen zugänglichen Tür od.dgl. derart verschlossen sein, daß jedes Öffnen de Tür in der Aufzeichnungseinrichtung angezeigt wird. Ebenso können sämtliche erlaubterweise händisch betätigbaren Stell- und Regeleinrichtungen von der Aufzeichnungseinrichtung überwacht werden, um die Art und Weise der Betätigung aufzuzeichnen.

Die Dateneingabe in die Steuereinheit 13 erfolgt z.B. über einen Kartenleser oder andere Lesegeräte für Datenträger, z.B. Lochstreifen, Magnetbänder, telefonische Modems, Funkdateneingaben, usw. Als einzugebende Daten kommen z.B. in Frage Gaskonzentrationen, Temperatur, Druck, Feuchte, O₂-, N₂-, CO₂-, H₂O-Gehalt, Art des zu lagernden Gutes, voraussichtliche Transportdauer, usw. Entsprechend einem in der Steuereinheit 13 gespeicherten Programm und/oder einem für das spezielle Gut speziell einzuspeichernden Programm wird das Steuerungsprogramm von der Steuereinheit 13 erstellt und der Ablauf nach Eingabe eines Startsignals eingeleitet und erfolgt in Abhängigkeit der der Steuereinheit 13 während des Betriebes zugeführten Meßsignale.

Wahlweise angeordnete Kühler 42, 43, 44 dienen zur Kühlung der umgewältzen Atmosphäre. Die Kühler 42, 43 können wahlweise dem Kompressor 3 vor- oder nachgeschaltet sein, um die Temperatur der Atmosphäre auf einen Wert ein- zu regeln, der für die Molekularsiebe geeignet ist. Im Kühler 44 kann eine Kühlung der geänderten Atmosphäre erfolgen, bevor diese wieder in der Abteilung 39 abgegeben wird. Der Kühler 11 hat jedoch seine Berechtigung, insbesondere in dem Fall, wenn vorwiegend die über dem Kanal 45 aus dem Lagerraum 41 abgezogene Atmosphäre umgewälzt bzw. gekühlt wird und nur relativ wenig Atmosphäre über die Umwälzeinrichtungen zur Änderung der Zusammensetzung geführt werden muß. Im Betrieb des Kühlcontainers wird für durch die Meßwerte bzw. durch die Steuereinheit bestimmte Zeitspannen die Atmosphäre zu ihrer Vergleichmäßigung bezügl. Temperatur usw. im Lagerraum 41 vom Gebläse 26 umgewälzt; diese Umwälzung kann vorzugsweise gleichzeitig oder auch unabhängig von der Umwälzung der Atmosphäre zur Einstellung ihrer Zusammensetzung erfolgen.

Die Umwälzung der Atmosphäre über den Abscheidekreislauf erfolgt vorzugsweise nach Bedarf bzw. nach Feststellung einer Überschreitung vorgegebeher Toleranzwerte der Gasbestandteile.

Ferner ist festzuhalten, daß sowohl beim Umwälzen der Atmosphäre des Behälters und/ oder beim Einbringen von Außenluft (beim anfänglichen Einstellen der Atmosphäre und/oder späteren Zusatz zur Atmosphäre) eine Abscheidung von unerwünschten Gasbestandteilen erfolgen kann, um eine gewünschte Atmosphärenzusammensetzung zu erhalten. Alle Ausführungen gelten somit sowohl für die Atmosphäre des Behälters als auch für zugeführte Außenluft.

Üblicherweise muß die Ware nach dem Transport sofort ausgeladen werden. Plötzliche Temperaturanstiege sind jedoch ausgesprochen schädlich, insbesondere wenn es sich um Lebensmittel, z.B. Obst, handelt. Es bildet sich ein Kondenswasseniederschlag und es kommt zu einem Schimmelbefall. Erfindungsgemäß wird demzufolge der Steuereinrichtung als weiterer Parameter, insbesondere neben der Transportzeit, über die Eingabeeinheit ein Parameter eingegeben, der den Beginn eines langsamen kontinuierlichen oder schrittweisen Ansteigens der Lagerraumtemperatur bewirkt und diese Temperatur an die zu erwartenden Umgebungstemperaturen nach dem Öffnen des Kühlbehälters bzw. nach dem Entladen anpaßt bzw. auf diese einregelt. Die eigentliche Atmosphäre bleibt jedoch während der Temperaturerhöhung bezüglich ihrer Zusammensetzung unverändert bzw. wird weiter optimal eingeregelt. Die Dauer dieses Temperaturanstieges wird auf etwa 1-3 Tage, vorzugsweise 2 Tage, eingeregelt. Bevorzugterweise benützt die Steuereinheit eine eigene Regeleinheit, um diesen Temperaturanstieg zu vollziehen. Diese Vorgangsweise bzw. dieses Regelungsverfahren bietet neben einer Qualitätsverbesserung der Waren auch eine beträchtliche Einsparung an Kühlenergie, insbesondere wenn nur mit flüssigem N₂ gekühlt wird.

## Patentansprüche

1. Transportabler Kühlcontainer, in dem eine an ein eingelagertes Gut, z.B. Lebensmittel, angepaßte Atmosphäre eingestellt bzw. aufrechterhalten wird, wozu aus dem Lagerraum (41) für das Gut entnommene Atmosphäre von einer Fördereinrichtung (3) abgesaugt wird und über eine Umwälzanlage (3,4,5,6,10) geführt ist, in der unter der Steuerung einer Steuereinrichtung (13) die Zusammensetzung der entnommenen Atmosphäre abgeändert wird, welche Umwälzanlage zumindest eine Einrichtung zur Abscheidung von H₂O-Dampf, zumindest eine Befeuchtungseinrichtung (12) zur Befeuchtung der entnommenen Atmosphäre und zumindest eine Einrichtung zur Veränderung des O₂- und CO₂-Gehaltes und zumindest eine Kühleinrichtung (11) zur Veränderung der Temperatur der Atmosphäre aufweist, aus welcher Umwälzanlage die geänderte Zusammensetzung aufweisende Atmosphäre in den Lagerraum (41) zurückgeführt wird,
- wobei die Umwälzanlage mit dem Lagerraum (41) über eine Absaugöffnung (2) und eine Einströmöffnung (40) in Verbindung steht,
- wobei die Steuereinrichtung (13) mit sämtlichen die einzelnen Betriebsparameter, zumindest den N₂-, O₂-, CO₂- und H₂O-Gehalt der Atmosphäre und deren Temperatur erfassenden Meßsensoren (14,15,16,17,18, 19,20) verbunden ist und eine Speichereinheit für Sollwerte der Betriebsparameter, zumindest den N₂-, O₂-, CO₂- und H₂O-Gehalt der Atmosphäre und deren Temperatur, aufweist, und
- wobei die Steuereinrichtung (13) mit sämtlichen Schalt- und Steuereinheiten des Kühlcontainers (1), z.B. Ventilen, Schaltern usw., verbunden ist und die Umwälzanlage (3,4,5,6,10) für bestimmte Zeitspannen bei Feststellung von Sollwertabweichungen von Betriebsparametern einschaltet,
dadurch gekennzeichnet,
- daß mit einem in einer Abteilung (39) des Kühlcontainers (1) gelegenen Gebläse (26) über eine Ansaugleitung (45) die Hauptmenge der Atmosphäre aus dem Lagerraum (41) entnommen, über eine Kühleinrichtung (11) und sodann über eine Befeuchtungseinrichtung (12) durch eine Ausströmöffnung (40) zurück in den Lagerraum (41) geführt ist,
- daß in der Umwälzanlage (3,4,5,6,10), die in der Abteilung (39) im Inneren des Kühlcontainers (1) vom Lagerraum (41) getrennt gelegen ist, dem Lagerraum (41) mit der Fördereinrichtung (3), die als Kompressor ausgebildet ist, eine Teilmenge der Atmosphäre entnommen wird und gegebenenfalls gemeinsam mit Außenluft über eine Einrichtung (4) zur H₂O-Entfernung oder eine Bypassleitung, sodann über eine CO₂- und/oder Äthylenabscheideeinrichtung (5) oder eine Bypassleitung und schließlich über eine O₂-Abscheideeinrichtung (6) oder eine Bypassleitung geführt ist,
- daß in die von der O₂-Abscheideeinrichtung (6) abgehende Rückleitung eine CO₂-Anreicherungseinrichtung (7), z.B. ein CO₂-Speicher, mündet,
- daß die die geänderte Zusammensetzung aufweisende Teilmenge der Hauptmenge zugeführt wird und gemeinsam vom Gebläse (26) über die Kühleinrichtung (11) und sodann die Befeuchtungseinrichtung (12) über die Austrittsöffnung (40) in den Lagerraum (41) rezirkuliert ist und
- daß die Steuereinrichtung (13) eine auf einführbare Datenträger, z.B. Lochkarten, Magnetstreifen, bzw. eine auf telefonische Modems, Funkdatenübertragung od.dgl., ansprechende Eingabeeinheit für extern einzugebende Daten, z.B. Transportdauer, Art des Gutes, Temperatur, Druck od.dgl., aufweist.

2. Kühlcontainer nach Anspruch 1, dadurch gekennzeichnet, daß vor einem Entzug von O₂ mit einem Molekularsieb die Restfeuchte der diesem zugeführten, z.B. bei Lebensmitteln als eingelagertem Gut bis 6 g H₂O/Nm³ aufweisenden, Atsmosphäre und/oder der Außenluft, auf weniger als 0,1 g bis 0,5 g H₂O/Nm³, insbesondere weniger als 0,1 g bis 0,2 g H₂O/Nm³, durch Wasserabscheidung eingestellt ist.

3. Kühlcontainer nach Anspruch 1 oder 2, dadurch gekennzeichnet, daß zum gleichzeitigen Entzug von CO₂ und Äthylen ein Molekularsiebgranulat für CO₂ und Äthylen in gemischter Form enthaltender(s) Behälter bzw. Molekularsieb (5) vorgesehen ist.

4. Kühlcontainer nach einem der Ansprüche 1 bis 3, dadurch gekennzeichnet, daß zur Nachregelung der gewünschten Sollwerte der Atmosphärenbestandteile die Abscheidewirkung der Gasentfernungseinrichtungen (4,5,6) steuernde Regler, bei denen die Stellgröße in Abhängigkeit von der Ist-Sollwertabweichung veränderbar ist, insbesondere PID-Regler, vorgesehen sind, wobei die Regler von der Steuereinrichtung (13) in Abhängigkeit von den Meßsignalen der Meßsensoren(14,15,16,17,18,19,20) gesteuert sind.

5. Kühlcontainer nach einem der Ansprüche 1 bis 4, dadurch gekennzeichnet, daß die Steuereinrichtung (13) zur Feststellung von Eingriffen in das Programm einen auf ihre Speichereinheit einwirkenden Schlüsselschalter umfaßt.

6. Kühlcontainer nach einem der Ansprüche 1 bis 5, dadurch gekennzeichnet, daß alle betätigbaren Einrichtungen, insbesondere auch die händisch betätigbaren Ventile, Regler und Stelleinrichtungen usw., mit Sensoren ausgerüstet sind, und daß bei deren händischer Betätigung die Art und der Zeitpunkt der Betätigung der Aufzeichnungseinrichtung der Steuereinrichtung (13) zur Speicherung übermittelt wird.

7. Kühlcontainer nach einem der Ansprüche 1 bis 6, dadurch gekennzeichnet, daß eine den Zutritt zur Steuereinrichtung (13) und/oder deren Aufzeichnungseinrichtung und/oder Gasabscheidungseinrichtungen (4,5,6) sowie allen weiteren betätigbaren Einrichtungen verhindernde Verschlußeinrichtung, z.B. eine Tür, ein Deckel usw., vorgesehen ist, deren Öffnung von der Aufzeichnungseinrichtung überwachbar und registrierbar ist.

8. Kühlcontainer nach einem der Ansprüche 1 bis 7, dadurch gekennzeichnet, daß im Lagerraum (41) vor der Austrittsöffnung (40) die Meßsensoren (14,15,16,17,18,19,20) angeordnet sind.

9. Kühlcontainer nach einem der Ansprüche 1 bis 8, dadurch gekennzeichnet, daß die Befeuchtungseinrichtung (12) in der Abteilung (39) vor der Austrittsöffnung (40) angeordnet ist.

10. Kühlcontainer nach einem der Ansprüche 1 bis 9, dadurch gekennzeichnet, daß die Steuereinheit eine Temperaturerhöhungsschaltung umfaßt, mit der eine bestimmte Zeitdauer vor dem Ende der Einlagerung eine Temperaturerhöhung im Lagerraum einregelbar ist, deren Endwert der nach Öffnung des Kühlcontainers zu erwartenden Umgebungstemperatur entspricht.

11. Kühlcontainer nach einem der Ansprüche 1 bis 10, dadurch gekennzeichnet, daß die Steuereinrichtung (13) eine Aufzeichnungseinrichtung bzw. einen Speicher für die während der Lagerung herrschenden bzw. eingeregelten Betriebsparameter, wie Atmosphärenzusammensetzung, Außen-, Innentemperatur, Druck, Luftfeuchtigkeit usw., aufweist, deren Daten gegebenenfalls nach Eingabe eines Codes auslesbar sind.

## Claims

1. A transportable refrigerated container in which an atmosphere adapted to stored goods, e.g. food, is adjusted or maintained, for which the atmosphere taken from the storage chamber (41) for the goods is sucked up by a conveying device (3) and guided by way of a circulating unit (3,4,5,6,10), in which the composition of the atmosphere taken is altered under the control of a control device (13), said circulating unit having at least one device for separating H₂O vapour, at least one humidifying device (12) for humidifying the atmosphere taken and at least one device for altering the O₂ and CO₂ content and at least one refrigerating device (11) for altering the temperature of the atmosphere, from which circulating unit the atmosphere having the altered composition is directed back into the storage chamber (41),
- wherein the circulating unit is connected to the storage chamber (41) by means of a suction opening (2) and an inlet opening (40),
- wherein the control device (13) is connected to all the measuring sensors (14,15,16,17,18,19,20) detecting the individual operational parameters, at least the N₂, O₂, CO₂ and H₂O content of the atmosphere and its temperature and has a storage unit for desired values of the operational parameters, at least the N₂, O₂ CO₂ and H₂O content of the atmosphere and its temperature, and
- wherein the control device (13) is connected to all switch and control units of the refrigerated container (1), e.g. valves, switches, etc, and the circulating unit (3,4,5,6,10) turns on for fixed time periods when establishing the desired value deviations from operational parameters,
characterised in that,
- the main quantity of atmosphere is taken from the storage chamber (41) with a blower (26) placed in a compartment (39) of the refrigerated container (1) by way of a suction line (45), directed by way of a cooling device (11) and then by way of a humidifying device (12) through an outlet opening (40) back into the storage chamber (41),
- in that in the circulating unit (3,4,5,6,10) which is placed in the compartment (39) in the interior of the refrigerated container (1) separated from the storage chamber (41), a partial quantity of the atmosphere is taken from the storage chamber (41) by the conveying device (3) which is formed as a compressor, and is possibly led together with the outer air by way of a device (4) for H₂O removal or a bypass line, then by way of a CO₂ and/or ethylene separating device (5) or a bypass line and finally by way of an O₂ separating device (6) or a bypass line,
- in that into the return line departing from the O₂ separating device (6) there opens a CO₂ enriching device (7), e.g. a CO₂ store,
- in that the partial quantity having the altered composition is supplied to the main quantity and recirculated together by the blower (26) by way of the cooling device (11) and then the humidifying device (12) by way of the outlet opening (40) into the storage chamber (41) and
- in that the control device (13) has an input unit for data to be supplied externally e.g. duration of transport, type of goods, temperature, pressure or the like, said unit responding to insertable data carriers, e.g. punched cards, magnetic strips, or to telephone modem, radio data transfer or the like.

2. A refrigerated container according to claim 1, characterised in that before extraction of O₂ with a molecular sieve the residual moisture of the atmosphere and/or the outer air supplied to this sieve, which, for example, is up to 6 g H₂O/Nm³, with food as stored goods, is adjusted to less than 0.1 g to 0.5 g H₂O/Nm³, and more particularly less than 0.1 g to 0.2 g H₂O/Nm³, by water separation.

3. A refrigerated container according to claim 1 or 2, characterised in that for the simultaneous extraction of CO₂ and ethylene a container or molecular sieve (5) is provided containing a molecular sieve granulate in mixed form for CO₂ and ethylene.

4. A refrigerated container according to one of claims 1 to 3, characterised in that regulators are provided for the readjustment of the desired values of the atmosphere components, in particular PID regulators, controlling the effect of separation of the gas removal devices (4,5,6), in which the regulated variable is able to be altered depending on the actual desired value deviation, wherein the regulators are controlled by the control device (13) depending on the measuring signals from the measuring sensors (14,15,16, 17,18,19,20).

5. A refrigerated container according to one of claims 1 to 4, characterised in that the control device (13) for determining interventions into the program comprises a key switch acting on its memory unit.

6. A refrigerated container according to one of claims 1 to 5, characterised in that all operable devices, in particular also the manually operable valves, regulators, adjusting devices etc. are equipped with sensors, and in that with the manual operation thereof the manner and point in time of activation of the recording device of the control device (13) is transferred into memory.

7. A refrigerated container according to one of claims 1 to 6, characterised in that a locking device e.g. a door, a lid etc. is provided preventing access to the control device (13) and/or its recording device and/or gas separating devices (4,5,6) as well as all further actuatable devices, the opening of which locking device is able to be monitored and registered by the recording device.

8. A refrigerated container according to one of claims 1 to 7, characterised in that the measuring sensors (14,15,16,17,18,19,20) are arranged in the storage chamber (41) in front of the outlet opening (40).

9. A refrigerated container according to one of claims 1 to 8, characterised in that the humidifying device (12) is arranged in the compartment (39) in front of the outlet opening (40).

10. A refrigerated container according to one of claims 1 to 9, characterised in that the control unit comprises a temperature increase circuit, with which a temperature increase in the storage chamber is able to be regulated within a fixed time period before the end of the storage, the end value of which corresponds to the ambient temperature to be expected after opening the refrigerated container.

11. A refrigerated container according to one of claims 1 to 10, characterised in that the control device (13) has a recording device or memory for the operational parameters preset or regulated during the storage, such as atmospheric composition, outer and inner temperatures, pressure, air humidity etc, the data of which are possibly able to be read after the input of a code.

## Revendications

1. Conteneur frigorifique transportable dans lequel une atmosphère adaptée à une marchandise entreposée, par exemple de la nourriture, est réglée ou maintenue constante, vers lequel l'atmosphère extraite de l'espace de stockage (41) de la marchandise est aspirée par un dispositif d'extraction (3) et transportée par un système de circulation (3, 4, 5, 6, 10) dans lequel, sous l'action d'un système de commande (13), la composition de l'atmosphère extraite est modifiée, ledit système de circulation comprenant au moins un dispositif de séparation de la vapeur d'H₂O, au moins un dispositif d'humidification (12) pour humidifier l'atmosphère extraite, au moins un dispositif permettant la modification de la teneur en O₂ et en CO₂, et au moins un dispositif de refroidissement (11) pour modifier la température de l'atmosphère, ladite atmosphère présentant une composition modifiée étant renvoyée par le système de circulation dans l'espace de stockage (41),
- le système de circulation étant relié à l'espace de stockage (41) par une ouverture d'aspiration (2) et par une ouverture d'admission (40),
- le système de commande (13) étant relié à l'ensemble des capteurs de mesure (14, 15, 16, 17, 18, 19, 20) des différents paramètres de fonctionnement, au moins de la teneur en N₂, O₂, CO₂ et H₂O de l'atmosphère et de sa température, et présentant une unité de mémorisation des valeurs de consigne des paramètres de fonctionnement, au moins de la teneur en N₂, O₂, CO₂ et H₂O de l'atmosphère et de sa température, et
- le système de commande (13) étant relié à l'ensemble des appareils de commutation et de commande du conteneur de refroidissement (1) tels que les vannes, les interrupteurs, etc., et le système de circulation (3, 4, 5, 6, 10) étant mis en route pendant des intervalles de temps déterminés en cas de divergence entre les valeurs de consigne et les paramètres de fonctionnement, caractérisé
- en ce que la plus grande partie de l'atmosphère est extraite de l'espace de stockage (41) par une conduite d'aspiration (45) au moyen d'une soufflante (26) disposée dans un compartiment (39) du conteneur frigorifique (1), et est renvoyée en passant sur un dispositif de refroidissement (11) puis sur un dispositif d'humidification (12), par une ouverture de refoulement (40) dans l'espace de stockage (41),
- en ce que dans le système de circulation (3, 4, 5, 6, 10) qui est situé à l'intérieur du conteneur frigorifique (1) dans un compartiment (39) séparé de l'espace de stockage (41), une quantité partielle de l'atmosphère est extraite de l'espace de stockage (41) par le dispositif d'extraction (3) constitué par un compresseur, et est conduite, le cas échéant associée à de l'air extérieur, sur un dispositif (4) d'extraction d'H₂O ou par une conduite de by-pass, puis sur un dispositif de séparation de CO₂ et/ou d'éthylène (5) ou par une conduite de by-pass, et enfin sur un dispositif de séparation d'O₂ (6) ou par une conduite de by-pass,
- en ce que sur la conduite sortant du dispositif de séparation d'O₂ (6) débouche un dispositif d'enrichissement en CO₂ (7), par exemple un réservoir de CO₂,
- en ce que la quantité partielle dont la composition a été modifiée est mélangée à la partie principale et en ce que l'ensemble est renvoyé par l'ouverture de refoulement (40) au moyen de la soufflante (26) dans l'espace de stockage (41) en passant sur le dispositif de refroidissement (11) puis sur le dispositif d'humidification (12), et
- en ce que le système de commande (13) dispose d'une unité d'entrée sur un support de données amovible, par exemple des cartes perforées, des bandes magnétiques, ou sur un modem téléphonique, par transmission radio, ou autre, pour des données à transmettre à l'extérieur, telles que la durée du transport, le type de marchandise, la température, la pression, ou similaire.

2. Conteneur frigorifique selon la revendication 1, caractérisé en ce que, avant la séparation de l'O₂ au moyen d'un filtre moléculaire, l'humidité résiduelle de l'atmosphère et/ou de l'air extérieur qui y est conduit, et qui peut par exemple atteindre 6 g d'H₂O / nm³ si la marchandise entreposée est un produit alimentaire, est ramenée par séparation d'eau à moins de 0,1 g à 0,5 g d'H₂O / nm³, et en particulier à moins de 0,1 g à 0,2 g d'H₂O / nm³,

3. Conteneur frigorifique selon la revendication 1 ou 2, caractérisé en ce que, pour l'extraction simultanée du CO₂ et de l'éthylène, il est prévu un réservoir ou filtre moléculaire (5) contenant un granulat de filtre moléculaire pour CO₂ et pour éthylène, sous forme mélangée.

4. Conteneur frigorifique selon l'une des revendications 1 à 3, caractérisé en ce que, pour retoucher les valeurs de consigne indiquées pour la composition de l'atmosphère, sont prévus des régulateurs commandant le pouvoir séparateur des dispositifs d'extraction de gaz (4, 5, 6), dont les valeurs de réglage peuvent être modifiées en fonction des écarts entre valeurs réelles et valeurs de consigne, en particulier des régulateurs PID, les régulateurs étant pilotés par le système de commande (13) en fonction des signaux de mesure des capteurs de mesure (14, 15, 16, 17, 18, 19, 20).

5. Conteneur frigorifique selon l'une des revendications 1 à 4, caractérisé en ce que le système de commande (13) dispose d'un commutateur à clef qui agit sur l'unité de mémoire pour constater les interventions dans le programme.

6. Conteneur frigorifique selon l'une des revendications 1 à 5, caractérisé en ce que tous les dispositifs susceptibles d'être actionnés, en particulier les vannes à commande manuelle, les régulateurs, les dispositifs de réglage, etc. sont équipés de capteurs, et en ce que, lors de leur actionnement manuel, le type et le moment où l'intervention à eu lieu sont transmis pour mise en mémoire dans le dispositif d'enregistrement du système de commande (13).

7. Conteneur frigorifique selon l'une des revendications 1 à 6, caractérisé en ce qu'un dispositif de verrouillage, constitué par un volet, un couvercle, etc. est prévu pour empêcher l'accès au système de commande (13) et/ou à son dispositif d'enregistrement et/ou aux dispositifs de séparation de gaz (4, 5, 6) ainsi qu'à tous les autres dispositifs susceptibles d'être actionnés, son ouverture pouvant être surveillée et enregistrée par le dispositif d'enregistrement.

8. Conteneur frigorifique selon l'une des revendications 1 à 7, caractérisé en ce que les capteurs de mesure (14, 15, 16, 17, 18, 19, 20) sont disposés dans l'espace de stockage (41) avant l'ouverture de refoulement (40).

9. Conteneur frigorifique selon l'une des revendications 1 à 8, caractérisé en ce que le dispositif d'humidification (12) est disposé dans le compartiment (39) avant l'ouverture de refoulement (40).

10. Conteneur frigorifique selon l'une des revendications 1 à 9, caractérisé en ce que l'unité de commande comporte une commande d'augmentation de température grâce à laquelle on peut procéder, à un moment déterminé avant la fin de la durée de stockage, à une augmentation réglable de la température dans l'espace de stockage, de façon à atteindre à l'ouverture du conteneur frigorifique, la température extérieure prévisible.

11. Conteneur frigorifique selon l'une des revendications 1 à 10, caractérisé en ce que l'unité de commande (13) comporte un dispositif d'enregistrement ou de mémorisation des paramètres de fonctionnement réglés ou effectifs lors du stockage, comme la composition de l'atmosphère, les températures à l'intérieur et à l'extérieur, la pression, l'humidité de l'air, etc., ces données pouvant, le cas échéant, être lues après introduction d'un code.
